# EUROPEAN PATENT SPECIFICATION

(11) **EP 0 696 469 B1**
(45) Date of publication and mention of the grant of the patent: **07.10.1998**
(21) Application number: 95111407.3
(22) Date of filing: 20.07.1995
(51) Int. Cl.: B01D 53/14, B01D 53/50

(54) **Removal of sulphur dioxide from gaseous streams**
Entfernung von Schwefeldioxid aus Gasströmen
Elimination de dioxyde de soufre de courants gazeux

(30) Priority: 09.08.1994 US 288000
(43) Date of publication of application: 14.02.1996
(73) Proprietor: ELF ATOCHEM NORTH AMERICA, INC., Philadelphia, Pennsylvania 19103-3222 (US)
(72) Inventor: Schon, Steven G., Strafford, Pennsylvania 19087 (US); Nosowitz, Martin, Berwyn, Pennsylvania 19312 (US); Goetz, Frederick J., Wilmington, Delaware 19810 (US)
(74) Representative: Kraus, Walter, Dr.

(56) References cited:
- EP-A- 0 074 894
- US-A- 4 100 257
- US-A- 4 283 373
- US-A- 5 389 351

## Description

### BACKGROUND OF THE INVENTION

This invention relates to a process for the removal of sulfur dioxide (SO2) from gaseous streams containing this contaminant. More particularly, it relates to the use of noncyclic sulfones and/or sulfonamides in liquid form to absorb the SO2 from mixtures with other gases.

Sulfur dioxide is a common atmospheric pollutant. It is desirable to remove SO2 from gaseous streams, e.g. combustion flue gases, before such streams are released to the atmosphere.

### The Prior Art

Procedures for the removal of SO2 from gaseous mixtures have been disclosed in the prior art. Scrubbing of SO2-containing gases has been practiced but suffers from the drawbacks that additional resources are consumed (the scrubbing agent), and disposal of the spent scrubbing agent requires the use of expensive procedures which attempt to provide environmentally safe disposal means.

Existing SO2 absorption processes use liquid absorption solvents which have a relatively low affinity for SO2. These solvents may be relatively volatile, resulting in undesirable atmospheric discharge of some of the solvent. They may have high miscibility with water, resulting in dilution of the solvent by water vapor absorbed from the treated gas, or the solvent may react with SO2, requiring additional equipment and energy to reconstitute or regenerate the solvent.

The present invention is an improved SO2 absorption process that overcomes the above-mentioned drawbacks. Non-cyclic sulfones or sulfonamides, especially water-insoluble sulfones or sulfonamides, (by themselves or in combination with non-volatile, carrier solvents), are used as high-efficiency SO2 absorption agents.

Several patent references have been noted as disclosing the absorption of SO2 from gas mixtures, including U.S. Patent No.'s 3,475,329 issued October 28, 1969; 3,553,936 issued January 12, 1971; and 4,191,732 issued March 4, 1980. The '936 patent discloses sulfolanes (heterocyclic sulfones) as SO2 adsorbents. U.S. Patent No. 4,504,287 discloses sulfonamides for the absorption of other gases, but not SO2 (cf. also US-A-4 100 257, US-A-4 283 373 and EP-A-0 074 894).

### Statement of the Invention

This invention is a process for the removal of sulfur dioxide from a stream of gases which comprises contacting said stream with a sulfur dioxide absorbing amount of a liquid absorbent comprising:
a) a non-cyclic sulfone of the formula

   R-SO₂-R',

   or
b) a non-cyclic sulfonamide of the formula 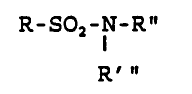 where, in the formulas of a) and b), R, R', R'' and R''' are primary (p-), secondary (sec-) or tertiary (t-) alkyl or alkaryl groups wherein the alkyl moieties have from 1 to 20 carbon atoms and R'' and R''' may also be hydrogen, water being substantially insoluble with the sulfone of a) and the sulfonamide of b), and separating the sulfur dioxide - rich absorbent from said stream.

### Detailed Description of the Invention

A process is disclosed herein for removing and recovering SO2 from a gas stream containing it by contacting the stream with a specified absorbent liquid having a high affinity for the SO2.

The active compliment of the absorbent liquid is composed of either of, or a mixture of, the following:
a) a non-cyclic sulfone, of the general formula

   R-SO₂-R'

   where R and R' represent a p-, sec-, or t-alkyl or alkaryl group; having from 1 to 20, preferably from 1 to 6 carbon atoms in the alkyl moieties, or
b) a non-cyclic sulfonamide, of the general formula 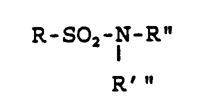 where R, R1, R'' and R''' are the same as R in a) above and R'' and R''' may also be hydrogen. Examples of the alkyl moieties include methyl, ethyl, n-propyl, sec-propyl, n-butyl, sec-butyl, t-butyl, n-pentyl, t-pentyl, n-hexyl, sec-hexyl, t-hexyl, n-octyl, t-octyl, t-nonyl, n-dodecyl, t-dodecyl, n-octadecyl, t-octadecyl, n-eicosanyl, and the like.

The absorbent is used in the liquid state, either by keeping the constituent sulfone or sulfonamide above the melting point, or, alternatively, for those that are used below their melting point, by dissolving them in a suitable non-volatile liquid solvent or co-sorbant, e.g. a glycol-ether, amine, heavy hydrocarbon solvent, high-molecular-weight alcohol, etc. The solvent or co-sorbant may advantageously be chosen for its physio-chemical properties, e.g., the ability to absorb or react with other pollutants (such as nitrogen oxides) that may be present in the gas stream being treated, allowing the simultaneous removal of these additional pollutants.

It has now been discovered that sulfonamides and non-cyclic sulfones, described herein, have a surprisingly high solubility for SO2. It has also been noted that many of these non-cyclic sulfones and sulfonamides are essentially insoluble in water, which is in contrast to the known high water-solubility of commonly available SO2 sorbents.

In addition to these newly-discovered properties, water-insoluble sulfones or sulfonamides have low vapor pressures, and are stable in the presence of typical flue gas constituents. This combination of properties makes them excellent choices for absorbing SO2 from gas streams. They have the following advantages:

Because of their insolubility in water, the described compounds will not absorb or become diluted by water vapor that may be present in the gas stream being treated. In contrast, U.S. 3,553,936 supra, teaches that the absorbent (sulfolane) can have "up to about 10 volume percent water", which must be stripped out using a "regenerator", i.e., additional processing steps.

Hot SO2-depleted gases exiting the absorber of the present invention can be cooled/quenched by direct contact with cool water, to condense-out absorbent that may be entrained or stripped-out by the off-gas, preventing atmospheric discharge of the absorbent, while recovering it in an essentially undiluted form (because of its insolubility, the absorbent will condense out as a separate phase from the quench water). Due to the insolubility of the absorbent in the water, water can be discharged with little or no need for further treatment.

Because of their chemical stability, there is no need for additional regeneration, purge, or make-up of the absorbent. In contrast, U.S. 4,191,732 supra, teaches that the absorbent (mono- or di-olefin) reacts with SO2 and must be thermally dissociated to recover the absorbent, thus requiring additional processing steps.

Through the selection of appropriate equipment and co-sorbents, other pollutants (e.g., fly ash, NOX compounds, etc.) may be removed simultaneously with the SO2 from the gas stream being treated, reducing the need for auxiliary pollution control devices or processes. The absorbents of this invention may be used in primary and secondary SO2 scrubbers.

Typically, the SO2-containing gas mixtures to be treated in the process of this invention are obtained, for example, from Claus plant tail-gas treatment, smelter-off gas products, coal combustion processes, and other combustion flue gases containing SO2. Other gases which may be present in the gas mixture include, for example, oxygen, hydrogen, nitrogen, carbon monoxide, carbon dioxide, olefins and the like.

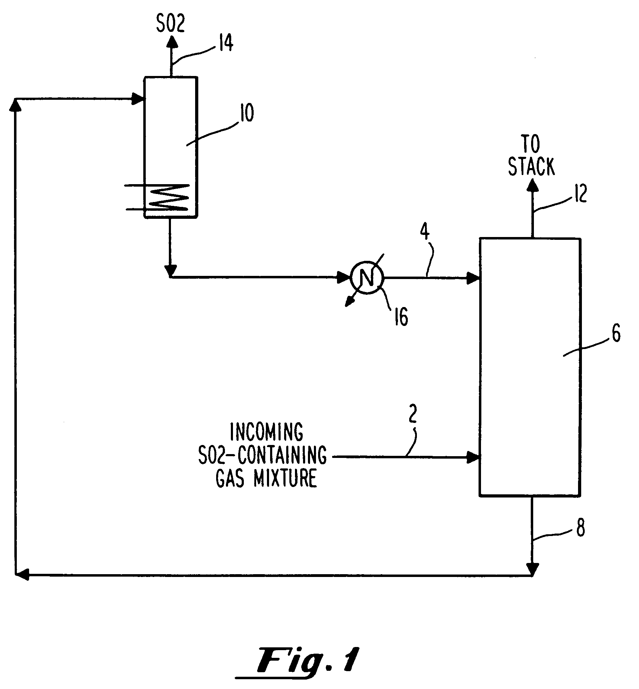

Referring to Figure 1 of the drawing, a gas mixture containing SO2 (stream 2) is contacted with cool liquid absorbent 4 in an absorber 6. The absorbent selectively removes SO2 from the gas mixture, resulting in a SO2-enriched absorbent stream 8 (which is sent to a stripper 10) and a SO2-depleted gas stream 12 (which is the gaseous effluent from the absorber). In the stripper 10, the SO2-rich absorbent is heated to desorb SO2, resulting in a concentrated SO2 stream 14 which is discharged, and a hot S02-depleted absorbent stream which is cooled at 16 and returned, via line 4, to the absorber 6, repeating the cycle.

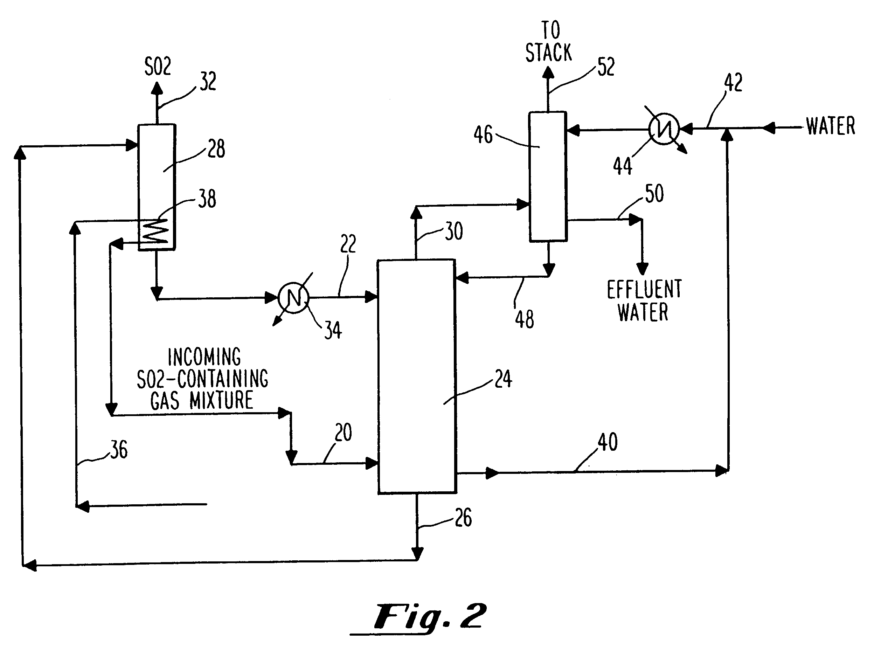

Referring to Figure 2 of the drawing, a gas mixture containing SO2 (stream 20) is contacted with cool liquid absorbent from stream 22 in absorber 24. The absorbent selectively removes SO2 from the gas mixture, resulting in an SO2-enriched absorbent stream 26 (which is sent to a stripper 28), and a SO2-depleted gas stream 30 (which is the gaseous overhead effluent.) In the stripper 28, the SO2-rich absorbent is heated to desorb SO2, resulting in a concentrated SO2 stream 32 (which is discharged overhead, and a hot SO2-depleted absorbent stream, which is cooled at 34 and returned to the absorber 24 thereby repeating the cycle. The heat for the stripper 28 is provided by the waste heat in the feed gas mixture to the absorber 24; the gas mixture is routed, via line 36, through a heat transfer device 38 (e.g. a coil, heat exchanger, etc.), imparting the required heat to the stripper 28. Water vapor may condense out of the gas mixture as it cools within the heat transfer device, or as it contacts the cooled absorbent in the absorber 24. Condensed water is removed near the bottom of the absorber 24 through line 40, optionally mixed with additional water (stream 42), and then cooled at 44. The SO2-depleted gas exiting the (quench-type) condenser 46, cooling the gas further, and condensing-out absorbent as a separate liquid phase (stream 48) from the quench condenser 46 , and is returned to the absorber 24. The warmed liquid condensate/water phase (stream 50) and the cooled, SO2-depleted gas (stream 52), are discharged from the direct-contact condenser 46.

While the absorbers of Figures 1 and 2 may be of any convenient or conventional design, for the case where the gas being treated contains appreciable quantities of particulates (e.g. fly ash), the absorber system can include contacting equipment (e.g., venturi jets, falling film devices, etc.) to facilitate the removal of the particulates from the gas stream. In such instances, additional solid/liquid separation steps (e.g. filtration or centrifugation) may be needed to separate the particulates from the absorbent and/or the condensate/water circulating through the system.

The absorber and direct contact condenser are preferably (but not necessarily) operated at slightly above atmospheric pressure, allowing for the pressure drop across the system, to permit discharge to the atmosphere without need for compressors or blowers.

The stripper is preferably (but not necessarily) operated at a pressure of 3-10 atmospheres (1 atm = 1.013 bar), allowing the recovered SO2 to be condensed as a liquid, facilitating storage and transportation of the material for use as an article of commerce.

The upper and lower operable limits, and the upper and lower preferred limits, of the process of this invention, where applicable, are set forth in the following table.

| | Operable Limits | | Preferred Limits | |
|---|---|---|---|---|
| Parameter | Lower | Upper | Lower | Upper |
| Absorber Temperature | Absorbent melting point | Absorbent boiling pt. | 40°C | 175°C |
| Stripper Temperature | Absorbent melting point | Absorbent boiling pt. | 50°C | 250°C |
| Absorber Pressure | Atmospheric | 200 psig* | Atmos. | 5 psig* |
| Stripper Pressure | Full vacuum | 200 psig* | 30 psig* | 135 psig* |
| Feed gas SO2 Concentration | 10 ppm | 10 vol. % | 500 ppm | 2 vol. % |
| Absorbent to gas ratio | Absorbent saturation with SO2 | Flooding point of absorber | 0.1 (wt./wt) | 5.0 (wt./wt.) |

| | | | | |
|---|---|---|---|---|
| * 14.50 psig = 1 bar | | | | |

The following examples are set forth to demonstrate this invention.

### Example 1

SO2 was sparged through 25.4 grams of di(isobutyl) sulfone (DIBS) to saturation. Analysis of the saturated DIBS showed that the solubility of SO2 is 72 gmoles per 100 gmoles DIBS (28 grams SO2 absorbed per 100 grams DIBS). Water was found to be insoluble in DIBS at 25°C.

SO2 saturated DIBS is stripped of SO2 by heating to its boiling point (263 °C) at atmospheric pressure. The off-gas (SO2) is removed from the stripping vessel by condensation in a dry-ice trap. The stripped DIBS, which is no longer saturated in SO2, is re-used for absorbing additional SO2.

### Example 2

SO2 was sparged through 24.5 grams of N,N-di(n-butyl) methane sulfonamide (DBMS) at 25°C, allowing the DBMS to saturate. Analysis of the saturated DBMS showed that the solubility of SO2 is 81 gmoles per 100 gmoles DBMS (25 grams SO2 absorbed per 100 grams DBMS). Water was found to be insoluble in DBMS at 25°C.

SO2-saturated DBMS is stripped of SO2 by heating to its boiling point (103°C) at a vacuum of 4 mm Hg absolute. The off-gas (SO2) is removed from the stripping vessel by the vacuum system. The stripped DBMS which is no longer saturated in SO2, is re-used for absorbing additional SO2.

Examples of other adsorbents (and their solubility ratings) which are included within the scope of this invention are methylxylyl sulfone (MSX) (82gmoles of SO2 per 100 gmoles of MSX), N,N-di(n-butyl)-p-toluene sulfonamide (DBTS) (86 gmoles of SO2 per 100 gmoles DBTS).

## Claims

1. A process for the removal of sulfur dioxide from a stream of gases comprising contacting said stream with a sulfur dioxide absorbing amount of a liquid absorbent comprising:
a) a non-cyclic sulfone of the formula
R-SO₂-R',
or
b) a non-cyclic sulfonamide of the formula 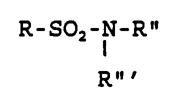 where, in the formulas a) or b), R,R'R'' and R''' are primary, secondary or tertiary alkyl, or alkaryl groups wherein the alkyl moieties have from 1 to 20 carbons and R'' and R''' may also be hydrogen, water being substantially insoluble with the sulfone of a) and the sulfonamide of b), and separating the rich sulfur dioxide enriched liquid absorbent from said stream.

2. The process of claim 1 wherein said sulfone or sulfonamide contacts said stream of gases while at a temperature maintained above the melting point of said sulfone or sulfonamide.

3. The process of claim 1 wherein said sulfone or sulfonamide which contacts said stream of gases is dissolved in a non-volatile liquid solvent therefor.

4. The process of claim 3 wherein said liquid solvent is a cosorbant for said sulfur dioxide.

5. The process of claim 3 wherein said liquid solvent is an absorbent for another gas or contaminant of said stream of gases, and separating said another gas or contaminant from said stream.

6. The process of claim 1 wherein R,R'R'' and R''' are alkyl groups having from 1 to 6 carbon atoms.

7. The process of claim 1 wherein the separated sulfur dioxide enriched liquid absorbent is desorbed of sulfur dioxide, and the desorbed absorbent is recycled to contact said stream of gases.

8. The process of claim 1 which is continuous.

9. The process of claim 7 which is continuous.

10. The process of claim 1 wherein said sulfone is di(isobutyl) sulfone.

11. The process of claim 1 wherein said sulfonamide is N,N-di(n-butyl) methane sulfonamide.

12. A continuous process for the removal of sulfur dioxide from a stream of gases comprising contacting said stream with a sulfur dioxide absorbing amount of an absorbent comprising:
a) a non-cyclic sulfone of the formula:
R-SO₂-R',
or
b) a nn-cyclic sulfonamide of the formula 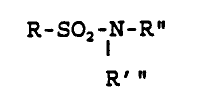 where, in the formulas a) and b), R, R', R'' and R''' are primary, secondary or tertiary alkyl, or alkaryl groups wherein the alkyl moieties have from 1 to 6 carbons and R'' and R''' may be hydrogen, water being substantially insoluble with said sulfone and said sulfonamide, said sulfone or sulfonamide being dissolved in a non-volatile liquid solvent therefor, and separating the sulfur dioxide enriched liquid absorbent from said stream.

13. The process of claim 12 wherein the separated sulfur dioxide enriched liquid absorbent is desorbed of sulfur dioxide, and the desorbed absorbent is recycled to contact said stream of gases.

14. The process of claim 12 wherein said non-volatile liquid solvent is an absorbent for another gas or contaminant of said stream of gases, and said another gas or contaminant is separated from said stream.

15. The process of claim 12 wherein said sulfone is di(isobutyl) sulfone.

16. The process of claims 12 wherein said sulfonamide is N,N-di(n-butyl) methane sulfonamide.

## Patentansprüche

1. Verfahren zur Entfernung von Schwefeldioxid aus einem Gasstrom, umfassend die Behandlung des Stroms mit einer Schwefeldioxid-absorbierenden Menge eines flüssigen Absorbens, umfassend:
a) ein nichtcyclisches Sulfon der Formel
R-SO₂-R'
oder
b) ein nichtcyclisches Sulfonamid der Formel 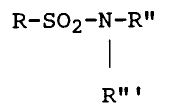 wobei in den Formeln a) oder b) R, R', R'' und R''' primäre, sekundäre oder tertiäre Alkyl- oder Alkarylgruppen bedeuten, wobei die Alkylgruppierungen 1 bis 20 Kohlenstoffe enthalten und R'' und R''' ebenfalls Wasserstoff bedeuten können, Wasser in dem Sulfon a) und dem Sulfonamid b) im wesentlichen unlöslich ist und wobei das angereicherte flüssige Absorbens, das reich an Schwefeldioxid ist, von dem Strom abgetrennt wird.

2. Verfahren nach Anspruch 1, dadurch **gekennzeichnet,** daß das Sulfon oder Sulfonamid mit den Gasströmen in Kontakt gebracht wird, während es bei einer Temperatur über dem Schmelzpunkt des Sulfons oder Sulfonamids gehalten wird.

3. Verfahren nach Anspruch 1, dadurch **gekennzeichnet,** daß das Sulfon oder Sulfonamid, welches mit den Gasströmen kontaktiert wird, in einem nichtflüchtigen flüssigen Lösungsmittel dafür gelöst ist.

4. Verfahren nach Anspruch 3, dadurch **gekennzeichnet,** daß das flüssige Lösungsmittel ein Cosorbens für das Schwefeldioxid ist.

5. Verfahren nach Anspruch 3, dadurch **gekennzeichnet,** daß das flüssige Lösungsmittel ein Absorbens für ein anderes Gas oder eine Kontaminante der Gasströme ist und wobei das andere Gas oder die Kontaminante von dem Strom abgetrennt wird.

6. Verfahren nach Anspruch 1, dadurch **gekennzeichnet,** daß R, R', R'' und R''' Alkylgruppen mit 1 bis 6 Kohlenstoffatomen bedeuten.

7. Verfahren nach Anspruch 1, dadurch **gekennzeichnet,** daß das mit abgetrenntem Schwefeldioxid angereicherte flüssige Absorbens von Schwefeldioxid desorbiert wird und daß das desorbierte Absorbens zu dem Kontakt mit den Gasströmen recyclisiert wird.

8. Verfahren nach Anspruch 1, dadurch **gekennzeichnet,** daß es kontinuierlich durchgeführt wird.

9. Verfahren nach Anspruch 7, dadurch **gekennzeichnet,** daß es kontinuierlich durchgeführt wird.

10. Verfahren nach Anspruch 1, dadurch **gekennzeichnet,** daß als Sulfon Di(isobutyl)sulfon verwendet wird.

11. Verfahren nach Anspruch 1, dadurch **gekennzeichnet,** daß als Sulfonamid N,N-Di(n-butyl)methansulfonamid verwendet wird.

12. Kontinuierliches Verfahren zur Entfernung von Schwefeldioxid aus Gasströmen, umfassend die Behandlung des Stroms mit einer Schwefeldioxid-absorbierenden Menge eines Absorbens, umfassend:
a) ein nichtcyclisches Sulfon der Formel
R-SO₂-R'
oder
b) ein nichtcyclisches Sulfonamid der Formel 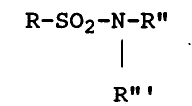 wobei in den Formeln a) und b) R, R', R'' und R''' primäre, sekundäre oder tertiäre Alkyl- oder Alkarylgruppen bedeuten, wobei die Alkylgruppierungen 1 bis 6 Kohlenstoffe enthalten und R'' und R''' Wasserstoff bedeuten können, Wasser in dem Sulfon und dem Sulfonamid im wesentlichen unlöslich ist, wobei das Sulfon oder das Sulfonamid in einem nichtflüchtigen flüssigen Lösungsmittel dafür gelöst ist und von dem Strom das Schwefeldioxid angereicherte flüssige Absorbens abgetrennt wird.

13. Verfahren nach Anspruch 12, dadurch **gekennzeichnet,** daß das abgetrennte Schwefeldioxid-angereicherte flüssige Absorbens von Schwefeldioxid desorbiert wird und daß das desorbierte Absorbens zu dem Kontakt mit den Gasströmen recyclisiert wird.

14. Verfahren nach Anspruch 12, dadurch **gekennzeichnet,** daß das nichtflüchtige flüssige Lösungsmittel ein Absorbens für ein anderes Gas oder eine Kontaminante der Gasströme ist und daß das andere Gas oder die Kontaminante von den Strömen abgetrennt wird.

15. Verfahren nach Anspruch 12, dadurch **gekennzeichnet,** daß als Sulfon Di(isobutyl)sulfon verwendet wird.

16. Verfahren nach Anspruch 12, dadurch **gekennzeichnet,** daß als Sulfonamid N,N-Di(n-butyl)methansulfonamid verwendet wird.

## Revendications

1. Procédé d'élimination de dioxyde de soufre dans un flux de gaz, comprenant la mise en contact dudit flux avec un absorbant liquide, en une quantité absorbant le dioxyde de soufre, comprenant :
a) une sulfone non cyclique répondant à la formule
R-SO₂-R',
ou
b) un sulfamide non cyclique répondant à la formule 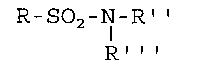 où, dans les formules a) et b), R, R', R'' et R''' sont des groupes alkyles ou alkaryles primaires, secondaires ou tertiaires, les motifs alkyles ayant de 1 à 20 atomes de carbone, et R'' et R''' peuvent être aussi l'hydrogène, la sulfone de a) et le sulfamide de b) étant essentiellement insolubles dans l'eau, et la séparation de l'absorbant liquide enrichi en dioxyde de soufre d'avec ledit flux.

2. Procédé selon la revendication 1, dans lequel ladite sulfone ou ledit sulfamide vient au contact dudit flux de gaz à une température maintenue au-dessus du point de fusion de ladite sulfone ou dudit sulfamide.

3. Procédé selon la revendication 1, dans lequel ladite sulfone ou ledit sulfamide qui vient au contact dudit flux de gaz est dissoute (dissous) dans un solvant liquide non volatil pour celle-ci ou pour celui-ci.

4. Procédé selon la revendication 3, dans lequel ledit solvant liquide est un cosorbant pour ledit dioxyde de soufre.

5. Procédé selon la revendication 3, dans lequel ledit solvant liquide est un absorbant pour un autre gaz ou contaminant dudit flux de gaz et sépare ledit autre gaz ou contaminant dudit flux.

6. Procédé selon la revendication 1, dans lequel R, R', R'' et R''' sont des groupes alkyles ayant de 1 à 6 atomes de carbone.

7. Procédé selon la revendication 1, dans lequel l'absorbant liquide séparé enrichi en dioxyde de soufre est débarrassé du dioxyde de soufre par désorption, et l'absorbant après désorption est recyclé pour venir au contact dudit flux de gaz.

8. Procédé selon la revendication 1, qui est un procédé en continu.

9. Procédé selon la revendication 7, qui est un procédé en continu.

10. Procédé selon la revendication 1, dans lequel ladite sulfone est la di(isobutyl)sulfone.

11. Procédé selon la revendication 1, dans lequel ledit sulfamide est le N,N-di(n-butyl)méthane-sulfamide.

12. Procédé en continu pour l'élimination de dioxyde de soufre dans un flux de gaz, comprenant la mise en contact dudit flux avec un absorbant, en une quantité absorbant le dioxyde de soufre, comprenant :
a) une sulfone non cyclique répondant à la formule
R-SO₂-R',
ou
b) un sulfamide non cyclique répondant à la formule 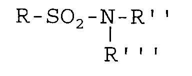 où, dans les formules a) et b), R, R', R'' et R''' sont des groupes alkyles ou alkaryles primaires, secondaires ou tertiaires, les motifs alkyles ayant de 1 à 6 atomes de carbone, et R'' et R''' peuvent être l'hydrogène, ladite sulfone et ledit sulfamide étant essentiellement insolubles dans l'eau, ladite sulfone ou ledit sulfamide étant dissoute (dissous) dans un solvant liquide non volatil pour celle-ci ou pour celui-ci, et la séparation de l'absorbant liquide enrichi en dioxyde de soufre d'avec ledit flux.

13. Procédé selon la revendication 12, dans lequel l'absorbant liquide séparé enrichi en dioxyde de soufre est débarrassé du dioxyde de soufre par désorption, et l'absorbant après désorption est recyclé pour venir au contact dudit flux de gaz.

14. Procédé selon la revendication 12, dans lequel ledit solvant liquide non volatil est un absorbant pour un autre gaz ou contaminant dudit flux de gaz, et ledit autre gaz ou contaminant est séparé dudit flux.

15. Procédé selon la revendication 12, dans lequel ladite sulfone est la di(isobutyl)sulfone.

16. Procédé selon la revendication 12, dans lequel ledit sulfamide est le N,N-di(n-butyl)méthane-sulfamide.
